# EUROPEAN PATENT APPLICATION

(11) **EP 3 364 072 A1**
(43) Date of publication of application: **22.08.2018**
(21) Application number: 16855693.4
(22) Date of filing: 11.10.2016
(51) Int. Cl.: F16H 19/06, F16H 21/00, G01B 7/02, G01D 5/12, G01D 5/16

(54) **ACTUATOR AND STRUCTURE COMPRISING SAME**

(30) Priority: 12.10.2015 KR 20150142139; 12.10.2015 KR 20150142145
(71) Applicant: Korea University of Technology and Education Industry-University Corporation Foundation, Cheonan-si, Chungcheongnam-do 31253 (KR)
(72) Inventor: RYU, Jee Hwan, Cheonan-si Chungcheongnam-do 31253 (KR); POPOV, Dmitry, Cheonan-si Chungcheongnam-do 31253 (KR)
(74) Representative: Botti, Mario
(86) International application number: PCT/KR2016/011362
(87) International publication number: WO 2017/065476

(57) **Abstract**

The present invention relates to an actuator and a structure including the same which move a weight member by adjusting an overall length of a string unit by twisting or loosening strings, and disclosed are an actuator and a structure including the same, the actuator including: a string unit which includes string members having the other side connected to a weight member; a drive unit which is connected to one side of the string members and moves the weight member by adjusting an overall length of the string unit by twisting or loosening the string members; and a movement limiting unit which is provided outside the string unit and limits a movement of the weight member by a length difference from the string unit or a restoration unit which is provided between the weight member and the drive unit and restores the weight member when the string members are loosened.

## Description

### [Technical Field]

The present invention relates to an actuator and a structure including the same, and more particularly, to an actuator and a structure including the same which move a weight member by adjusting an overall length of a string unit by twisting or loosening strings.

### [Background Art]

In general, actuators of generating mechanical force by using energy are used in various industrial fields for various purposes such as lifting of weight members.

However, the actuator generally used in the related art is disadvantageous because the actuator has a large volume and is mechanically complicated and expensive compared to force generated by the actuator.

Furthermore, the actuator also has an additional disadvantage in that maintenance of the actuator is difficult and the actuator is often broken down.

Meanwhile, in a case in which a size of the actuator is reduced to solve the aforementioned disadvantages, there is a clear limitation in designing and applying the actuator because it is difficult to generate sufficient force such that the actuator is inevitably used for limited purposes in a small-sized mechanical product or the like.

Accordingly, there is a need for a method for solving the aforementioned problems.

### [Disclosure]

### [Technical Problem]

The present invention has been made in an effort to solve the problem in the related art, and objects of the present invention are as follows.

A first object of the present invention is to provide an actuator and a structure including the same which may move a weight member by adjusting an overall length of a string unit by twisting and loosening the string unit, restore a position of the weight member, and physically restrict a movement of the weight member.

A second object of the present invention is to provide an actuator and a structure including the same which stop a drive unit when a length of a string unit reaches a predetermined value, or limit a change in length of the string unit or increase a length of the string unit when a weight member reaches a predetermined position.

A third object of the present invention is to provide an actuator and a structure including the same which are capable of preparing for a situation in which a supply of electric power to a measurement unit is cut off.

A fourth object of the present invention is to provide a link structure capable of moving a link module or a moving structure capable of moving a moving module by adjusting a length of a string unit.

A fifth object of the present invention is to provide a structure capable of being connected to a weight member in various forms.

The problem to be solved by the present invention is not limited to the aforementioned problem, and other problems, which are not mentioned above, may be clearly understood from the following descriptions by those skilled in the art to which the present invention pertains.

### [Technical Solution]

To solve the technical problems, an actuator according to the present invention may include: a string unit which includes string members having the other side connected to a weight member; a drive unit which is connected to one side of the string members and moves the weight member by adjusting an overall length of the string unit by twisting or loosening the string members; and a movement limiting unit which is provided outside the string unit and limits a movement of the weight member by a length difference from the string unit.

Here, the movement limiting unit may be provided outside the string unit so as to surround the string unit, and the movement of the weight member may be physically limited as the weight member comes into contact with an end portion of the movement limiting unit.

In addition, the movement limiting unit may be provided outside the string unit so as to surround the string unit and may guide a direction in which a length of the string unit is changed.

In addition, the movement limiting unit may be made of a flexible material and may be deformed in accordance with bending of the string unit.

Further, the actuator may include a position detecting unit which is provided at an end portion of the movement limiting unit and detects a position of the weight member, in which when a distance between the weight member and an end of the movement limiting unit is zero, a change in length of the string unit may be stopped by restricting a rotation of the drive unit, or a length of the string unit may be increased by allowing a rotating shaft of the drive unit to be in a free state.

Further, the actuator may further include a sensing unit which is disposed between the drive unit and one side of the string member, measures a load applied to the string members by the weight member, and controls tensile force of the string members by additionally twisting or loosening the string members by controlling the drive unit based on the measured load value.

Meanwhile, an actuator and a link structure including the same according to the present invention may include: a link module which includes multiple link members rotatably and hingedly coupled to one another; and an actuator which includes a string unit that includes string members having the other side connected to an end of the link module, and a drive unit that is connected to one side of the string members and moves the link module by adjusting an overall length of the string unit by twisting or loosening the string members, in which a movement limiting unit, which limits a range in which the link module is moved by a length difference from the string unit, is provided outside the string unit.

In addition, an actuator and a moving structure including the same according to the present invention may include: a moving module which has a predetermined length and is made of a flexible material; and an actuator which includes a string unit that includes string members having the other side connected to an end of the moving module, and a drive unit that is connected to one side of the string members and moves the moving module by adjusting an overall length of the string unit by twisting or loosening the string members, in which a movement limiting unit, which limits a range in which the moving module is moved by a length difference from the string unit, is provided outside the string unit.

Further, an actuator according to the present invention may include: a string unit which includes string members having the other side connected to a weight member; a drive unit which is connected to one side of the string members and moves the weight member by adjusting an overall length of the string unit by twisting or loosening the string members; and a restoration unit which is provided between the weight member and the drive unit and restores the weight member when the string members are loosened.

Here, the restoration unit may restore the weight member by elastic force.

In addition, a rotation of the drive unit may be immediately restricted to fix a position of the weight member when a supply of electric power to the drive unit is cut off.

Further, the actuator may further include a measurement unit which tracks a change in length of the string unit.

In this case, the measurement unit may include an encoder which operates in conjunction with the drive unit and outputs a signal for each particular rotation angle when the drive unit is rotated, and may track a change in length of the string unit which is calculated based on the rotation angle of the drive unit measured by the encoder.

Meanwhile, the measurement unit may include a potentiometer of which the resistance value varies in accordance with the rotation of the drive unit, and may track a change in length of the string unit based on an absolute value of a rotational speed or a rotation angle of the drive unit measured by the potentiometer.

Further, the measurement unit may include a conductive rubber which is made of a material, that has elasticity and allows an electric current to flow therethrough, and connects the drive unit and the weight member, may measure resistance of the conductive rubber, and may track a change in length of the string unit based on a change in resistance value in accordance with to a length of the conductive rubber.

Further, the measurement unit may include a distance measuring sensor which directly measures a distance between the drive unit and the weight member.

In addition, the measurement unit may include a cable which has one end connected to the weight member and is moved together with the weight member along with the movement of the weight member, and a potentiometer which measures a position of the other end of the cable, and may track a change in length of the string unit based on the position of the other end of the cable measured by the potentiometer.

Further, the actuator may further include a storage unit which stores a rotation angle of the drive unit or a length of the string unit measured by the measurement unit in order to prepare for a situation in which a supply of electric power to the measurement unit is cut off.

In this case, the storage unit may include a capacitor which estimates a rotation angle of the drive unit based on the amount of electric power stored in accordance with the rotation of the drive unit.

Further, the rotation of the drive unit may be stopped when the length of the string unit measured by the measurement unit reaches a predetermined value.

Further, the actuator may further include a sensing unit which is disposed between the drive unit and one side of the string member, measures a load applied to the string members by the weight member, and controls tensile force of the string members by additionally twisting or loosening the string members by controlling the drive unit based on the measured load value.

Meanwhile, an actuator and a dynamic structure including the same according to the present invention may include one or more actuator modules which each include a string unit that includes string members having the other side connected to a weight member, and a drive unit that is connected to one side of the string member and moves the weight member by adjusting an overall length of the string unit by twisting or loosening the string members, in which a restoration unit, which restores the weight member when the string members are loosened, is provided between the weight member and the drive unit, in which when multiple actuator modules are provided, the multiple actuator modules are connected in series or in parallel.

### [Advantageous Effects]

The actuator and the structure including the same according to the present invention, which have the aforementioned configurations, have the following effects.

First, according to the present invention, it is possible to move the weight member by adjusting the overall length of the string unit by twisting or loosening the string unit, and it is possible to restore the position of the weight member by using the restoration unit and to physically limit the movement of the weight member by using the movement limiting unit.

Second, according to the present invention, it is possible to stop the drive unit when the length of the string unit measured by the measurement unit reaches a predetermined value, or it is possible to restrict a change in length of the string unit by using the movement limiting unit or increase the length of the string unit when the position of the weight member reaches a predetermined position.

Third, according to the present invention, with the storage unit for storing the rotation angle of the drive unit or the length of the string unit, it is possible to prepare for a situation in which the supply of electric power to the measurement unit is cut off.

Fourth, according to the present invention, it is possible to move the link module or the moving module by adjusting the length of the string unit.

Fifth, according to the present invention, it is possible to connect the weight members in various forms by using various numbers of actuators.

The effects of the present invention are not limited to the aforementioned effects, and other effects, which are not mentioned above, will be clearly understood by those skilled in the art from the disclosure of the claims.

### [Description of Drawings]

FIG. 1 is a view illustrating an initial state of an actuator according to a first exemplary embodiment of the present invention.
FIG. 2 is a view illustrating a state in which a length of a string unit of the actuator according to the first exemplary embodiment of the present invention is decreased.
FIG. 3 is a view illustrating a state in which a movement of a weight member is limited as the weight member comes into contact with a movement limiting unit of the actuator according to the first exemplary embodiment of the present invention.
FIG. 4 is a view illustrating a state in which the movement limiting unit of the actuator according to the first exemplary embodiment of the present invention is bent.
FIG. 5 is a view illustrating a link structure according to the first exemplary embodiment of the present invention.
FIG. 6 is a view illustrating a moving structure according to the first exemplary embodiment of the present invention.
FIG. 7 is a view illustrating an initial state of an actuator according to a second exemplary embodiment of the present invention.
FIG. 8 is a view illustrating a state in which a weight member is moved by an operation of the actuator according to the second exemplary embodiment of the present invention.
FIG. 9 is a view illustrating a state in which an encoder is applied as a measurement unit of the actuator according to the second exemplary embodiment of the present invention.
FIG. 10 is a view illustrating a state in which a rotary potentiometer is applied as the measurement unit of the actuator according to the second exemplary embodiment of the present invention.
FIG. 11 is a view illustrating a state in which a conductive rubber is applied as the measurement unit of the actuator according to the second exemplary embodiment of the present invention.
FIG. 12 is a view illustrating a state in which a distance measuring sensor is applied as the measurement unit of the actuator according to the second exemplary embodiment of the present invention.
FIG. 13 is a view illustrating a state in which a cable and a rectilinear potentiometer are applied as the measurement unit of the actuator according to the second exemplary embodiment of the present invention.
FIGS. 14 to 19 are views illustrating examples of dynamic structures which may be variously configured in accordance with the second exemplary embodiment of the present invention.
FIG. 20 is a view illustrating a state in which tensile force of a string unit is controlled in real time by a sensing unit which may be applied to the first exemplary embodiment or the second exemplary embodiment of the present invention.
FIG. 21 is a view illustrating a detailed configuration of the sensing unit which may be applied to the first exemplary embodiment or the second exemplary embodiment of the present invention.

### [Description of Main Reference Numerals of Drawings]

10: Weight member
100: String unit
102: String member
200: Drive unit
300: Movement limiting unit
400: Position detecting unit
500a: Link module
500b: Moving module
600: Restoration unit
700: Measurement unit
710: Encoder
720: Potentiometer
732: Conductive rubber
734: Resistance measuring device
740: Distance measuring sensor
752: Cable
754: Potentiometer
800: Storage unit
810: Capacitor

### [Best Mode]

Hereinafter, a first exemplary embodiment of the present invention for specifically accomplishing the objects of the present invention will be described with reference to the accompanying drawings. In the description of the present exemplary embodiment, like terms and like reference numerals are used for like configurations, and additional descriptions for the like configurations will be omitted.

In addition, in the description of the present exemplary embodiment, the configurations illustrated in the drawings merely suggest examples for helping understand the detailed description, but are not intended to limit the scope of the present invention.

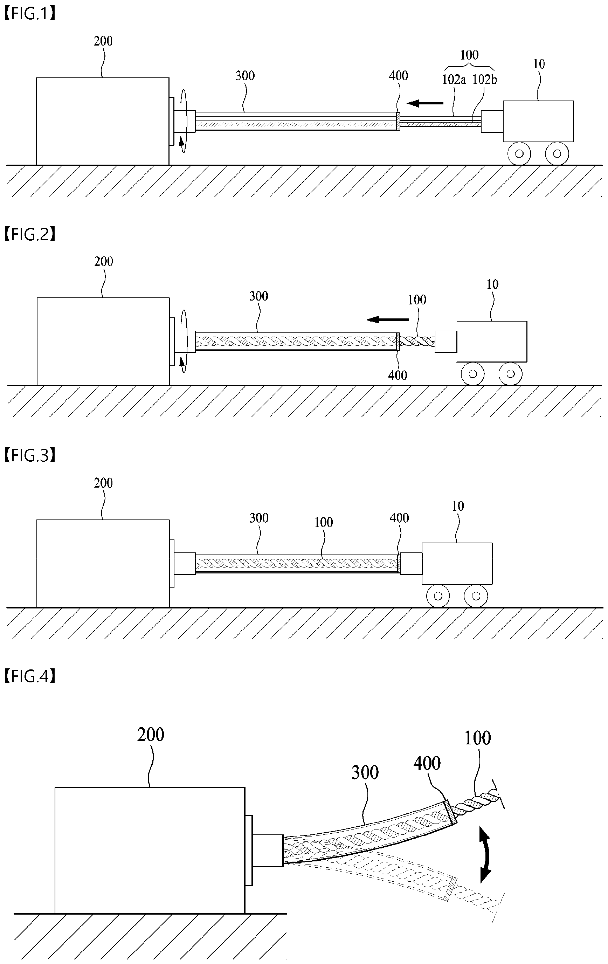

First, as illustrated in FIGS. 1 and 2, an actuator according to a first exemplary embodiment of the present invention includes a string unit 100, a drive unit 200, and a movement limiting unit 300.

The string unit 100 includes multiple rows of string members 102a and 102b having the other side connected to a weight member 10. The multiple rows of string members 102a and 102b may be disposed in parallel with each other.

In this case, the string members 102a and 102b need not be necessarily disposed in multiple rows, the protection scope of the present invention is of course not limited by this configuration, and the same of course applies to the entire following detailed description.

The drive unit 200 is connected to one side of the string members 102a and 102b, and moves the weight member 10 by adjusting an overall length of the string unit 100 by twisting or loosening the string members 102a and 102b. Here, the drive unit 200 may be a motor for rotating the string members 102a and 102b.

That is, one side of the string members 102a and 102b is connected to the drive unit 200, and the weight member 10 is connected to the other side of the string members 102a and 102b. In this state, when the drive unit 200 is operated, the multiple rows of string members 102a and 102b are rotated together with the drive unit 200, such that the multiple rows of string members 102a and 102b are twisted. Therefore, the overall length of the string unit 100 is necessarily decreased, and the weight member 10 connected to the other side of the string members 102a and 102b is moved.

Further, when the operation of the drive unit 200 is stopped, a rotating shaft of the drive unit 200 in a free state, not a restricted state with respect to the rotation. Therefore, when the string unit 100, which has been twisted by the rotation of the drive unit 200, is pulled in a direction toward the weight member 10 in the state in which the drive unit 200 is stopped, the rotating shaft of the drive unit 200 is freely rotated such that the string unit 100 is loosened, and as a result, the length of the string unit 100 is increased, such that the weight member 10 may be restored.

Further, the actuator according to the present exemplary embodiment operated in this way is advantageous in comparison with other actuators in the related art because the actuator according to the present exemplary embodiment may implement excellent outputs compared to a volume thereof and may be applied to various mechanical devices.

In addition, the drawings and the following descriptions illustrate and describe examples in which the weight member 10 is moved by using the actuator of the present exemplary embodiment, but the actuator according to the present exemplary embodiment is not applied only to the movement of the weight member 10.

Further, in the present exemplary embodiment, in a case in which a supply of electric power to the drive unit 200 is cut off unexpectedly, the rotating shaft of the drive unit 200 becomes a free state such that the string members 102a and 102b are loosened, thereby preventing the movement of the weight member 10.

If the rotation of the drive unit 200 is not restricted, the string members 102a and 102b are loosened when the supply of electric power to the drive unit 200 is suddenly cut off, such that the weight member 10 is moved in a direction away from the drive unit 200, and even though the electric power is supplied again, it is difficult to accurately control a position of the weight member 10 because it is impossible to know a position of the weight member 10 before the supply of electric power to the drive unit 200 is cut off.

However, in the present exemplary embodiment, the rotation of the drive unit 200 is restricted immediately after the supply of electric power to the drive unit 200 is cut off, thereby fixing the position of the weight member 10.

Meanwhile, the movement limiting unit 300, which restricts the movement of the weight member 10 by a length difference from the string unit 100, is provided outside the string unit 100.

As illustrated in FIG. 3, in the present exemplary embodiment, the movement limiting unit 300 is a tube that covers an outer portion of the string unit 100, and the movement limiting unit 300 may have a length shorter than a length of the string unit 100 and may have an outer diameter larger than a diameter of the string unit 100.

Therefore, when the length of the string unit 100 is decreased, such that the weight member 10 comes into contact with an end portion of the movement limiting unit 300 while moving toward the drive unit 200, the weight member 10 is supported by the movement limiting unit 300, such that the movement of the weight member 10 may be physically limited.

Further, the movement limiting unit 300 is provided outside the string unit 100 so as to surround the string unit 100, thereby guiding a direction in which the length of the string unit 100 is changed.

As illustrated in FIG. 4, the movement limiting unit 300 may be made of a flexible material to cope with bending of the string unit 100. Therefore, in a case in which the weight member 10 is positioned at a height different from a height of the drive unit 200 or the string unit 100 is not disposed straight, the movement limiting unit 300 may be deformed corresponding to the string unit 100.

In the present exemplary embodiment, the example in which the movement limiting unit 300 is a tube has been described, but the movement limiting unit 300 is not limited to the aforementioned configuration, and any configuration may be applied as long as the configuration may restrict the movement of the weight member 10 by the length difference from the string unit 100.

Further, the actuator according to the present exemplary embodiment may further include a position detecting unit 400. The position detecting unit 400 is provided at an end portion of the movement limiting unit 300 and may serve to detect the position of the weight member 10.

For example, the position detecting unit 400 according to the present exemplary embodiment may be configured by a pair of magnets, one magnet may be installed at the end portion of the movement limiting unit 300, and the other magnet may be installed on the weight member 10. Further, when the weight member 10 is moved and then the pair of magnets comes into contact with each other, it may be determined that a distance between the end portion of the movement limiting unit 300 and the weight member 10 is zero.

Alternatively, the position detecting unit 400 according to the present exemplary embodiment may include a light emitting unit and a light receiving unit and detect the position of the weight member 10 based on the time for which light emitted from the light emitting unit reaches the light receiving unit.

As described above, when the distance between the end portion of the movement limiting unit 300 and the weight member 10, which is detected by the position detecting unit 400, becomes zero, the drive motor may perform a predetermined function.

Here, the predetermined function may be a function of restricting the rotation of the drive motor at the same time when the drive motor is stopped, thereby preventing a further change in length of the string unit 100.

Alternatively, the predetermined function is a function of stopping the drive motor and allowing the rotating shaft to be in a free state so that the length of the string unit 100 may be increased.

In other words, when the length of the string unit 100 becomes equal to the length of the movement limiting unit 300, the weight member 10 may stop moving, or the weight member 10 may be restored in the direction away from the drive unit 200. Therefore, the actuator according to the present exemplary embodiment may perform various functions.

Further, although not illustrated in the drawings, a restoration unit (not illustrated), which provides force in a direction in which the weight member 10 moves away from the drive unit 200, is provided between the drive unit 200 and the weight member 10, such that the weight member 10 may be restored by elasticity of the restoration unit (not illustrated) when the rotating shaft of the drive unit 200 is in the free state.

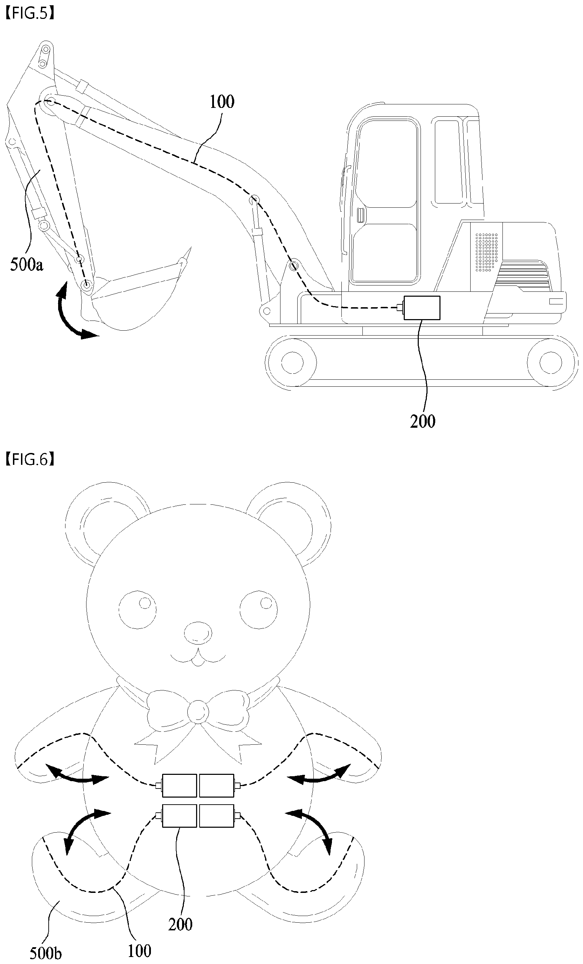

Hereinafter, a link structure according to the first exemplary embodiment of the present invention will be described with reference to FIG. 5.

As illustrated in FIG. 5, the link structure according to the exemplary embodiment of the present invention includes a link module 500a and an actuator.

The link module 500a includes multiple link members which are rotatably and hingedly coupled to one another.

Further, the actuator includes the string unit 100 which includes the multiple rows of string members 102a and 102b having the other side connected to an end of the link module 500a, and the drive unit 200 which is connected to one side of the string members 102a and 102b and moves the link module 500a by adjusting the overall length of the string unit 100 by twisting or loosening the string members 102a and 102b.

Further, the movement limiting unit 300, which restricts a range in which the link module 500a is moved by a length difference from the string unit 100, is provided outside the string unit 100.

Here, the actuator described in the exemplary embodiment of the present invention may be applied as the actuator. Therefore, a detailed description of the actuator will be omitted.

Hereinafter, an operation of the link structure according to the present exemplary embodiment will be described.

When the drive unit 200 is operated and the string unit 100 is rotated, the length of the string unit 100 is decreased. Further, since one end of the string unit 100 is connected to the link module 500a, the link structure may be folded by the rotation of the link as the length of the string unit 100 is decreased.

Further, although not illustrated in the drawing, when the length of the string unit 100 reaches a predetermined value, the drive unit 200 may stop operating, thereby stopping the link module 500a from being folded. Here, when the rotation of the rotating shaft of the drive unit 200 is restricted, the link module 500a stops moving, and when the rotating shaft of the drive unit 200 becomes the free state, the link module 500a may be unfolded again as the string unit 100 is loosened.

The link structure according to the present exemplary embodiment may be applied to toys, such as a toy excavator, including multiple links, robots including multiple joints, and the like as illustrated in FIG. 5.

Hereinafter, a moving structure according to the exemplary embodiment of the present invention will be described with reference to FIG. 6.

As illustrated in FIG. 6, the moving structure according to the first exemplary embodiment of the present invention includes a moving module 500b and an actuator.

### (The moving module 500b may have a predetermined length and may be made of a flexible material.)

Further, the actuator includes the string unit 100 which includes the multiple rows of string members 102a and 102b having the other side connected to an end of the moving module 500b, and the drive unit 200 which is connected to one side of the string members 102a and 102b and moves the moving module 500b by adjusting the overall length of the string unit 100 by twisting or loosening the string members 102a and 102b.

Further, the movement limiting unit 300, which restricts a range in which the moving module 500b is moved by a length difference from the string unit 100, is provided outside the string unit 100.

Here, the actuator described in the exemplary embodiment of the present invention may be applied as the actuator. Therefore, a detailed description of the actuator will be omitted.

Hereinafter, an operation of the moving structure according to the present exemplary embodiment will be described.

In the present exemplary embodiment, the moving structure may be a doll. Further, the actuator is provided in the doll, and the string unit 100 may be connected to an end of an arm or a leg of the doll.

Therefore, when the drive unit 200 is operated and the string unit 100 is rotated, the length of the string unit 100 is decreased, such that the arm or the leg of the doll is bent inward.

Further, although not illustrated in the drawing, when the length of the string unit 100 reaches a predetermined value, the drive unit 200 may stop operating, thereby stopping the arm or the leg of the doll from being folded. Here, when the rotation of the rotating shaft of the drive unit 200 is restricted, the arm or the leg of the doll stops moving, and when the rotating shaft of the drive unit 200 is in the free state, the arm or the leg of the doll may be unfolded again as the string unit 100 is loosened.

The moving structure according to the present exemplary embodiment may be variously applied to dolls, toys, and the like, which are made of flexible materials, as illustrated in FIG. 6.

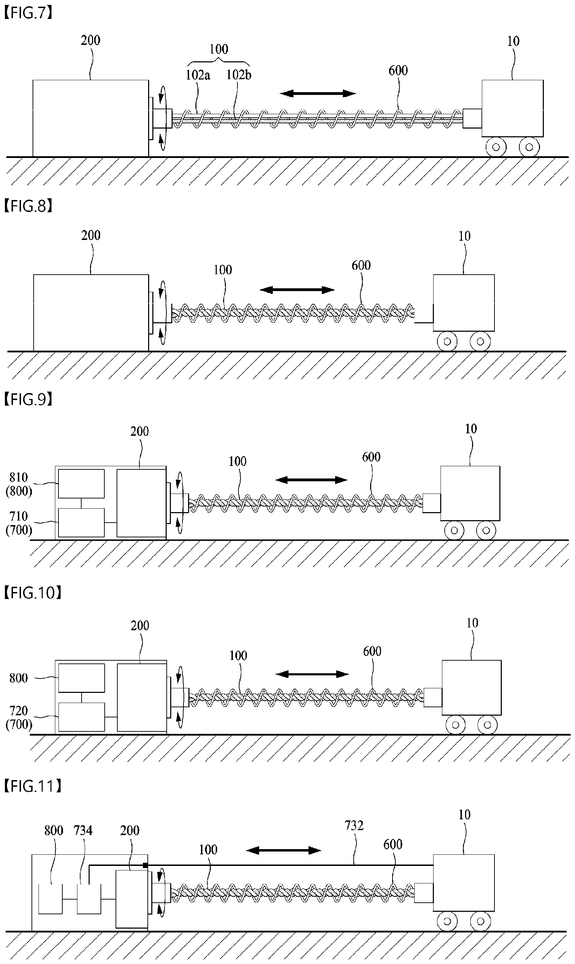

Next, an actuator according to a second exemplary embodiment of the present invention will be described with reference to FIGS. 7 to 13.

As illustrated in FIGS. 7 and 8, the actuator according to the second exemplary embodiment of the present invention basically includes a string unit 100, a drive unit 200, and a restoration unit 600.

The string unit 100 may include multiple rows of string members 102a and 102b having the other side connected to a weight member 10. In this case, the multiple rows of string members 102a and 102b may be disposed in parallel with each other, but the multiple rows of string members 102a and 102b need of course not be disposed in parallel with each other, and the string unit 100 may include a single row of string members, not the multiple rows of string members. That is, the string unit 100 may be variously configured as long as the string unit 100 is disposed between the weight member 10 and the drive unit 200 and twisted or loosened, the scope of the present invention is not limited by this configuration, and the same of course applies to the entire following detailed description.

The drive unit 200 is connected to one side of the string members and moves the weight member 10 by adjusting the overall length of the string unit 100 by twisting or loosening the string members. Here, the drive unit 200 may be a motor for rotating the string members.

That is, one side of the string members is connected to the drive unit 200, and the weight member 10 is connected to the other side of the string members. When the drive unit 200 is operated in this state, the multiple rows of string members are rotated together with the drive unit 200, such that the multiple rows of string members are twisted. Therefore, the overall length of the string unit 100 is necessarily decreased, and the weight member 10 connected to the other side of the string members is moved.

Further, when the operation of the drive unit 200 is stopped, a rotating shaft of the drive unit 200 is in a free state, not a restricted state with respect to the rotation. Therefore, when the string unit 100, which has been twisted by the rotation of the drive unit 200, is pulled in a direction toward the weight member 10 in the state in which the drive unit 200 is stopped, the rotating shaft of the drive unit 200 is freely rotated such that the string unit 100 is loosened, and as a result, the length of the string unit 100 is increased, such that the weight member 10 may be restored.

The restoration unit 600 may be provided between the weight member 10 and the drive unit 200 in order to smoothly restore the weight member 10. In the present exemplary embodiment, the restoration unit 600 may be a spring which provides elastic force in a direction in which the weight member 10 moves away from the drive unit 200.

Therefore, when the drive unit 200 stops rotating, force is applied by the restoration unit 600 in the direction in which the weight member 10 moves away from the drive unit 200, such that the string unit 100 is pulled in the direction toward the weight member 10. Therefore, the twisted string members are loosened such that the length of the string unit 100 is increased, and the weight member 10 may be restored to the extent that the length of the string unit 100 is increased.

Here, the restoration unit 600 may be provided outside the string unit 100 so as to surround the string unit 100. Therefore, the restoration unit 600 may guide the direction in which the length of the string unit 100 is decreased or increased.

The drawings and the descriptions in the present exemplary embodiment illustrate and describe the example in which the restoration unit 600 is a spring, but the restoration unit 600 is not limited to the spring, and any configuration may be applied as long as the configuration may restore the weight member 10.

Further, the actuator according to the present exemplary embodiment operated in this way is advantageous in comparison with other actuators in the related art because the actuator according to the present exemplary embodiment may implement excellent outputs compared to a volume thereof and may be applied to various mechanical devices.

In addition, the drawings and the following descriptions illustrate and describe examples in which the weight member 10 is moved by using the actuator of the present exemplary embodiment, but the actuator according to the present exemplary embodiment is not applied only to the movement of the weight member 10.

Further, in the present exemplary embodiment, in a case in which a supply of electric power to the drive unit 200 is cut off unexpectedly, the rotating shaft of the drive unit 200 is in a free state such that the string members are loosened, thereby preventing the movement of the weight member 10.

If the rotation of the drive unit 200 is not restricted, the string members are loosened when the supply of electric power to the drive unit 200 is suddenly cut off, such that the weight member 10 is moved in a direction away from the drive unit 200, and even though the electric power is supplied again, it is difficult to accurately control a position of the weight member 10 because it is impossible to know a position of the weight member 10 before the supply of electric power to the drive unit 200 is cut off.

However, in the present exemplary embodiment, the rotation of the drive unit 200 is restricted immediately after the supply of electric power to the drive unit 200 is cut off, thereby fixing the position of the weight member 10.

Meanwhile, the actuator according to the present invention may further include various measurement units 700 for tracking a change in length of the string unit 100.

Hereinafter, the various measurement units 700 according to the present exemplary embodiment will be described with reference to FIGS. 9 to 13.

As illustrated in FIG. 9, the measurement unit 700 according to the present exemplary embodiment may include an encoder 710 which operates in conjunction with the drive unit 200 and outputs a signal for each particular rotation angle when the drive unit 200 is rotated.

Further, the rotation angle of the drive unit 200 may be calculated based on the signal outputted from the encoder 710, and a change in length of the string unit 100 may be tracked based on the rotation angle of the drive unit 200.

As illustrated in FIG. 10, a potentiometer 720 of which the resistance value varies in accordance with the rotation of the drive unit 200, may be applied as the measurement unit 700 according to the present exemplary embodiment.

In general, since a resistance value outputted from the potentiometer 720 is in direct proportion to the rotation angle, the rotation angle of the drive unit 200 may be obtained based on the resistance value outputted from the potentiometer 720. Further, it is possible to track the change in length of the string unit 100 by using the potentiometer 720.

As illustrated in FIG. 11, a conductive rubber 732, which connects the drive unit 200 and the weight member 10 and is made of a material that has elasticity and allows electric current to flow therethrough, and a resistance measuring device 734, which measures resistance of the conductive rubber 732, may be applied as the measurement unit 700 according to the present exemplary embodiment.

In general, a resistance value of a conductor is increased as a cross-sectional area of the conductor is decreased and a length of the conductor is increased. Therefore, the resistance of the conductive rubber 732 is increased as the length of the string unit 100 is increased, and the resistance of the conductive rubber 732 is decreased as the length of the string unit 100 is decreased, and as a result, it is possible to track the change in length of the string unit 100 based on a change in resistance value with respect to the length of the conductive rubber 732 by measuring the resistance of the conductive rubber 732.

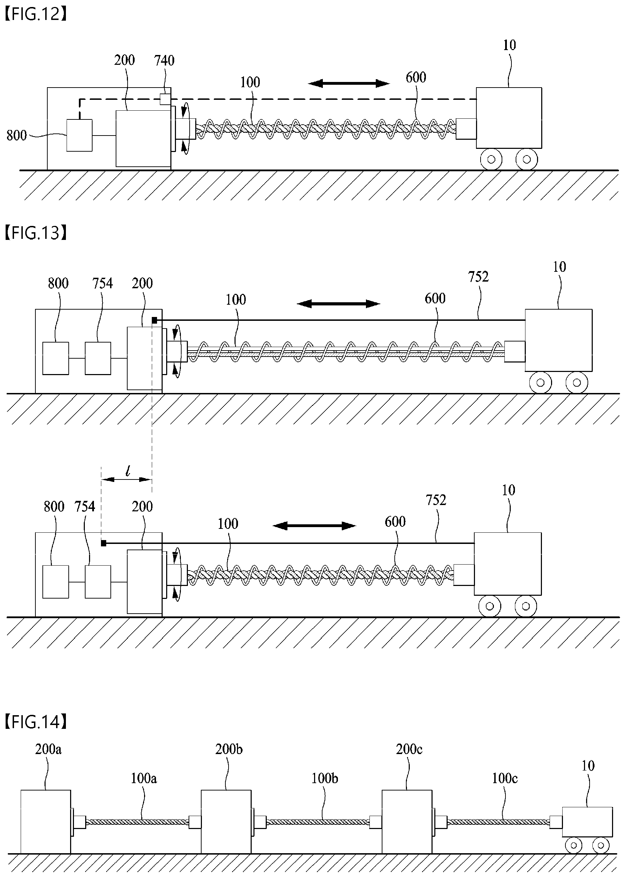

As illustrated in FIG. 12, a distance measuring sensor 740, which directly measures a distance between the drive unit 200 and the weight member 10, may be applied as the measurement unit 700 according to the present exemplary embodiment.

For example, the drive unit 200 is provided with a light emitting element for emitting light toward the weight member 10, and the weight member 10 is provided with a light receiving sensor for detecting the light emitted from the light emitting element, such that a change in length of the string unit 100 may be tracked based on a change in time for which the light emitted from the light emitting element reaches the light receiving sensor.

As illustrated in FIG. 13, the measurement unit 700 according to the present exemplary embodiment may include a cable 752 which has one end connected to the weight member 10 and moves along with the movement of the weight member 10, and a potentiometer 754 which measures a position of the other end of the cable 752.

Here, a resistance value of the potentiometer 754 is changed in accordance with a rectilinear displacement thereof. Therefore, it is possible to know the position of the other end of the cable 752 based on the resistance value outputted from the potentiometer 754. Further, it is possible to track the change in length of the string unit 100 by using the potentiometer 754.

Further, a storage unit 800, which stores the rotation angle of the drive unit 200 or the length of the string unit 100 measured by the measurement unit 700, may be further included to prepare for a situation in which a supply of electric power to the measurement unit 700 is cut off.

Here, the storage unit 800 may include a capacitor 810 which estimates the rotation angle of the drive unit 200 based on the amount of charges stored in accordance with the rotation of the drive unit 200.

The capacitor 810 may be autonomously charged and thus does not require a separate power source, and as a result, the amount of charges stored in the capacitor 810 is not changed even though the supply of electric power to the measurement unit 700 is suddenly cut off. Therefore, it is possible to know accumulated rotational speeds of the drive unit 200 even though the supply of electric power to the measurement unit 700 is cut off.

Further, the rotation of the drive unit 200 may be stopped when the length of the string unit 100 measured by the measurement unit 700 reaches a predetermined value.

In the present exemplary embodiment, the example in which the storage unit 800 is the capacitor 810 has been described, but the storage unit 800 is not limited to the aforementioned configuration, and any configuration may be applied as long as the configuration may store the rotation angle of the drive unit 200 or the length of the string unit 100 even though the supply of electric power to the measurement unit 700 is cut off.

As described above, the actuator according to the second exemplary embodiment of the present invention has been described with reference to FIGS. 7 to 13.

Hereinafter, dynamic structures including the aforementioned actuators will be described with reference to FIGS. 14 to 19.

As illustrated in FIG. 14, the dynamic structure according to the second exemplary embodiment of the present invention may include multiple actuators, and the multiple actuators may be connected in series.

That is, assuming that the dynamic structure includes three actuators, and the three actuators are a first actuator, a second actuator, and a third actuator in numerical order, a weight member connected to a string unit 100a of the first actuator may be a drive unit 200b of the second actuator. Further, a weight member connected to a string unit 100b of the second actuator may be a drive unit 200c of the third actuator, and a weight member 10, which is finally intended to be moved, may be connected to a string unit 100c of the third actuator.

Therefore, it is possible to move the weight member 10 in a short time by simultaneously operating the three drive units 200a, 200b, and 200c.

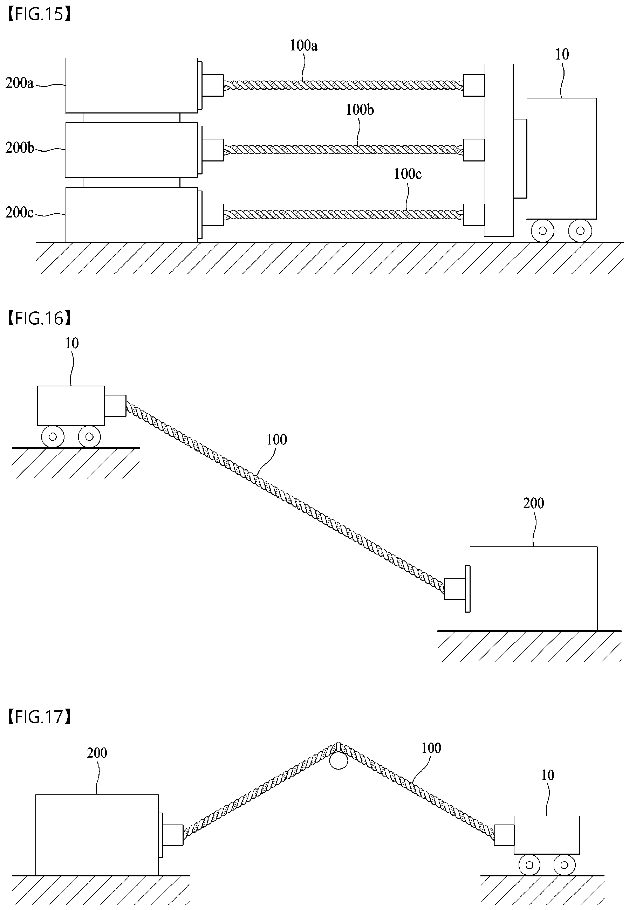

As illustrated in FIG. 15, the dynamic structure according to the second exemplary embodiment of the present invention may include multiple actuators, and the multiple actuators may be connected in parallel.

That is, assuming that the dynamic structure includes three actuators, and the three actuators are a first actuator, a second actuator, and a third actuator in numerical order, the single weight member 10 may be connected to the string units 100a, 100b, and 100c of the first actuator, the second actuator, and the third actuator.

Therefore, it is possible to move the weight member 10 with high force by simultaneously operating the three drive units 200a, 200b, and 200c, and as a result, it is possible to move the heavy weight member 10 by connecting the multiple actuators in parallel.

As illustrated in FIG. 16, the dynamic structure according to the second exemplary embodiment of the present invention includes a single actuator, and the drive unit 200 and the weight member 10 may be disposed at different heights.

Alternatively, as illustrated in FIG. 17, the dynamic structure according to the second exemplary embodiment of the present invention includes a single actuator, and when another structure having a height difference from the drive unit 200 and the weight member 10 is formed between the drive unit 200 and the weight member 10, the string unit 100 may connect the drive unit 200 and the weight member 10 in a state in which the string unit 100 is bent.

This configuration may be implemented because the string unit 100 is configured by the flexible string members such as yarn or wires having a small cross-sectional area.

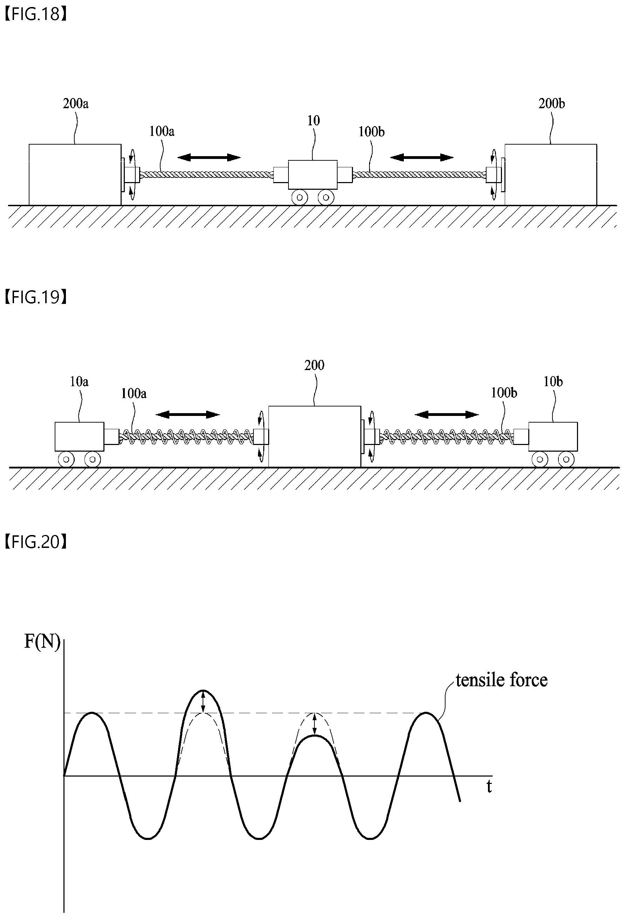

As illustrated in FIG. 18, the dynamic structure according to the second exemplary embodiment of the present invention may include a pair of actuators. Further, the drive units 200a and 200b may be connected to both sides of the single weight member 10.

Assuming that the drive units connected to both sides of the weight member 10 are the first drive unit 200a and the second drive unit 200b, respectively, when the first drive unit 200a operates, the second drive unit 200b stops operating, such that the weight member 10 is moved toward the first drive unit 200a, and when the second drive unit 200b operates, the first drive unit 200a stops operating, such that the weight member 10 is moved toward the second drive unit 200b, and as a result, the weight member 10 may be reciprocally moved between the first drive unit 200a and the second drive unit 200b.

As illustrated in FIG. 19, the dynamic structure according to the second exemplary embodiment of the present invention may include a single actuator. Further, the string units 100a and 100b may be connected to both sides of the single drive unit 200, and weight members 10a and 10b may be connected to the string units 100a and 100b, respectively.

Therefore, the two weight members 10a and 10b may be moved by operating the single drive unit 200.

In addition to the aforementioned exemplary embodiments, the dynamic structure may include various numbers of actuators, and the actuators may be connected to the weight member 10 in various forms.

Meanwhile, the first exemplary embodiment and the second exemplary embodiment of the present invention may further include a sensing unit 900 as a configuration for controlling tensile force of the string unit 100.

Here, the sensing unit 900 is configured to measure uniaxial tensile force applied to the string unit 100 by the weight member 10 and control, in real time, force required to move the weight member 10 based on the measured value.

More specifically, as illustrated in FIG. 20, the sensing unit 900 measures a load (tensile force) applied to the string members 102a and 102b by the weight member 10, and the sensing unit 900 transmits a control signal to the drive unit 200 to control the drive unit 200 in a case in which it is necessary to move the weight member 10 with larger force or smaller force based on the measured load value, thereby controlling, in real time, force for moving the weight member 10 by additionally twisting or loosening the string members 102a and 102b.

That is, it is possible to control, in the form of a sine wave, the force for moving the weight member using the actuator as illustrated in FIG. 20, and it is possible to apply larger or smaller force to the weight member 10 by controlling the tensile force applied to the string members 102a and 102b as necessary.

Further, the sensing unit 900 may set the force applied to the weight member 10 by the string unit 100 so that the force has a constant value.

More specifically, the sensing unit 900 measures a load (tensile force) applied to the string members 102a and 102b by the weight member 10, and the sensing unit 900 transmits a control signal to the drive unit 200 to control the drive unit 200 when the measured load value is larger or smaller than a predetermined value, thereby controlling the force for moving the weight member 10, so that the force has a constant value, by additionally twisting or loosening the string members 102a and 102b.

For example, if the force for moving the weight member 10 is set to 30 N, tensile force applied to the string members 102a and 102b is measured, and when the measured value is 50 N, the drive unit 200 may be controlled to loosen the string members 102a and 102b so that the force applied to the weight member 10 is maintained to be 30 N.

Therefore, the force applied to the weight member 10 may be constantly maintained by controlling the tensile force of the string members 102a and 102b regardless of outputs and capacity of the motor applied to the drive unit 200.

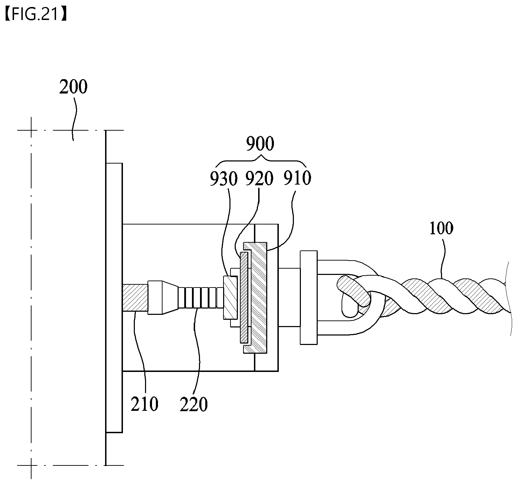

Meanwhile, as illustrated in FIG. 21, the sensing unit 900 may be disposed between the drive unit 200 and one side of the string members 102a and 102b, and may include a load cell 910, a disc 920, and a thrust bearing 930 as detailed constituent elements.

The load cell 910 is configured to measure a load applied to the string members 102a and 102b, that is, the string unit 100 and disposed to be spaced apart from the disc 920 coupled to the other side of the thrust bearing 930 connected to one side of the string unit 100, and the load cell 910 may measure the load applied to the string unit 100 while coming into contact with the disc 920 which is moved by the load (tensile force) applied to the string unit 100 by the weight member 10.

In this case, the thrust bearing 930 may be connected to the drive unit 200 by a flexible shaft 220 connected to a rotating shaft 210 of the drive unit 200, and the disc 920 may be coupled to the other side of the thrust bearing 930 so as to be directed toward the load cell 910.

As described above, according to the first exemplary embodiment and the second exemplary embodiment of the present invention, the sensing unit 900 may be further included as the configuration capable of controlling the tensile force of the string unit 100, and the load applied to the string members 102a and 102b by the weight member 10 is measured by the sensing unit 900, and the drive unit 200 is controlled based on the measured load value, and as a result, it is possible to control the tensile force of the string unit 100 by additionally twisting or loosening the string members 102a and 102b.

While the exemplary embodiments according to the present invention have been described above, it is obvious to those skilled in the art that the present invention may be specified in other particular forms in addition to the aforementioned exemplary embodiments without departing from the spirit or the scope of the present invention. Accordingly, it should be understood that the aforementioned exemplary embodiments are not restrictive but illustrative, and thus the present invention is not limited to the aforementioned description, and may be modified within the scope of the appended claims and the equivalent range thereto.

## Claims

1. An actuator comprising:
a string unit which includes string members having the other side connected to a weight member;
a drive unit which is connected to one side of the string members and moves the weight member by adjusting an overall length of the string unit by twisting or loosening the string members; and
a movement limiting unit which is provided outside the string unit and limits a movement of the weight member by a length difference from the string unit.

2. The actuator of claim 1, wherein the movement limiting unit is provided outside the string unit so as to surround the string unit, and the movement of the weight member is physically limited as the weight member comes into contact with an end portion of the movement limiting unit.

3. The actuator of claim 1, wherein
the movement limiting unit is provided outside the string unit so as to surround the string unit and guides a direction in which a length of the string unit is changed.

4. The actuator of claim 1, wherein the movement limiting unit is made of a flexible material and is deformable in accordance with bending of the string unit.

5. The actuator of claim 1, comprising:
a position detecting unit which is provided at an end portion of the movement limiting unit and detects a position of the weight member,
wherein when a distance between the weight member and an end of the movement limiting unit is zero, a change in length of the string unit is stopped by restricting a rotation of the drive unit, or a length of the string unit is increased by allowing a rotating shaft of the drive unit to be in a free state.

6. The actuator of claim 1, further comprising:
a sensing unit which is disposed between the drive unit and one side of the string member, measures a load applied to the string members by the weight member, and controls tensile force of the string members by additionally twisting or loosening the string members by controlling the drive unit based on the measured load value.

7. A link structure comprising:
a link module which includes multiple link members rotatably and hingedly coupled to one another; and
an actuator which includes a string unit that includes string members having the other side connected to an end of the link module, and a drive unit that is connected to one side of the string members and moves the link module by adjusting an overall length of the string unit by twisting or loosening the string members, wherein a movement limiting unit, which limits a range in which the link module is moved by a length difference from the string unit, is provided outside the string unit.

8. A moving structure comprising:
a moving module which has a predetermined length and is made of a flexible material; and
an actuator which includes a string unit that includes string members having the other side connected to an end of the moving module, and a drive unit that is connected to one side of the string members and moves the moving module by adjusting an overall length of the string unit by twisting or loosening the string members, wherein a movement limiting unit, which limits a range in which the moving module is moved by a length difference from the string unit, is provided outside the string unit.

9. An actuator comprising:
a string unit which includes string members having the other side connected to a weight member;
a drive unit which is connected to one side of the string members and moves the weight member by adjusting an overall length of the string unit by twisting or loosening the string members; and
a restoration unit which is provided between the weight member and the drive unit and restores the weight member when the string members are loosened.

10. The actuator of claim 9, wherein the restoration unit restores the weight member by elastic force.

11. The actuator of claim 9, wherein a rotation of the drive unit is immediately restricted to fix a position of the weight member when a supply of electric power to the drive unit is cut off.

12. The actuator of claim 9, further comprising:
a measurement unit which tracks a change in length of the string unit.

13. The actuator of claim 12, wherein the measurement unit includes an encoder which operates in conjunction with the drive unit and outputs a signal for each particular rotation angle when the drive unit is rotated, and tracks a change in length of the string unit which is calculated based on the rotation angle of the drive unit measured by the encoder.

14. The actuator of claim 12, wherein the measurement unit includes a potentiometer of which the resistance value varies in accordance with the rotation of the drive unit, and tracks a change in length of the string unit based on an absolute value of a rotational speed or a rotation angle of the drive unit measured by the potentiometer.

15. The actuator of claim 12, wherein the measurement unit includes a conductive rubber which is made of a material, that has elasticity and allows electric current to flow therethrough, and connects the drive unit and the weight member, measures resistance of the conductive rubber, and tracks a change in length of the string unit based on a change in resistance value with respect to a length of the conductive rubber.

16. The actuator of claim 12, wherein the measurement unit includes a distance measuring sensor which directly measures a distance between the drive unit and the weight member.

17. The actuator of claim 12, wherein the measurement unit includes a cable which has one end connected to the weight member and is moved together with the weight member along with the movement of the weight member, and a potentiometer which measures a position of the other end of the cable, and tracks a change in length of the string unit based on the position of the other end of the cable measured by the potentiometer.

18. The actuator of claim 12, further comprising:
a storage unit which stores a rotation angle of the drive unit or a length of the string unit measured by the measurement unit in order to prepare for a situation in which a supply of electric power to the measurement unit is cut off.

19. The actuator of claim 18, wherein the storage unit includes a capacitor which estimates a rotation angle of the drive unit based on the amount of electric power stored in accordance with the rotation of the drive unit.

20. The actuator of claim 12, wherein the rotation of the drive unit is stopped when the length of the string unit measured by the measurement unit reaches a predetermined value.

21. The actuator of claim 9, further comprising:
a sensing unit which is disposed between the drive unit and one side of the string member, measures a load applied to the string members by the weight member, and controls tensile force of the string members by additionally twisting or loosening the string members by controlling the drive unit based on the measured load value.

22. A dynamic structure comprising:
one or more actuator modules which each include a string unit that includes string members having the other side connected to a weight member, and a drive unit that is connected to one side of the string member and moves the weight member by adjusting an overall length of the string unit by twisting or loosening the string members, in which a restoration unit, which restores the weight member when the string members are loosened, is provided between the weight member and the drive unit,
wherein when multiple actuator modules are provided, the multiple actuator modules are connected in series or in parallel.
